# FASCICULE DE BREVET EUROPEEN

(11) **EP 4 330 603 B1**
(45) Date de publication et mention de la délivrance du brevet: **12.11.2025**
(21) Numéro de dépôt: 22725885.2
(22) Date de dépôt: 27.04.2022
(51) Int. Cl.: F24D 19/10, F28D 20/02, F24D 3/18, F24D 17/02, F28D 20/00

(54) **POMPE A CHALEUR ET DISPOSITIF DE STOCKAGE D'ENERGIE A CHANGEMENT DE PHASE**
WÄRMEPUMPE UND PHASENWECHSELENERGIESPEICHERVORRICHTUNG
HEAT PUMP AND PHASE-CHANGE ENERGY STORAGE DEVICE

(30) Priorité: 27.04.2021 FR 2104387
(43) Date de publication de la demande: 06.03.2024
(73) Titulaire: Arkeon Energy, 78210 Saint-Cyr-l'École (FR)
(72) Inventeur: CHAUVIN, Philippe, 78210 Saint-Cyr-l'Ecole (FR); OTHNIN-GIRARD, Hadrien, 22767 Hamburg (DE); GRANGER, Théo, 75019 Paris (FR)
(74) Mandataire: Oak & Fox
(86) Numéro de dépôt international: PCT/EP2022/061277
(87) Numéro de publication internationale: WO 2022/229293

(56) Documents cités:
- WO-A2-2008/037896
- US-A1- 2018 010 822
- US-A1- 2018 372 337

## Description

### Domaine de l'invention

Le domaine de l'invention se rapporte au domaine des systèmes comprenant une pompe à chaleur. En particulier, le domaine de l'invention se rapporte au domaine des systèmes comprenant une pompe à chaleur et au moins un dispositif de stockage d'énergie. Plus particulièrement, le domaine de l'invention se rapporte au domaine des systèmes comprenant une pompe à chaleur et au moins un dispositif de stockage d'énergie comprenant un matériau à changement de phase.

### Etat de la technique

Il existe dans l'art antérieur des systèmes comprenant à la fois une pompe à chaleur et des dispositifs de stockage d'énergie comprenant des matériaux à changement de phase.

Ces systèmes permettent de stocker de l'énergie thermique prélevée à une source froide par la pompe à chaleur dans les matériaux à changement de phase.

A titre d'exemple, le document CN111156699 et le document WO 2008037896 A2 décrivent un système de chauffage d'eau comprenant une pompe à chaleur et un dispositif de stockage d'énergie comprenant des matériaux à changement de phase, pour stocker l'énergie thermique prélevée dans l'air du milieu extérieur par la pompe à chaleur.

Toutefois, les pompes à chaleurs décrites dans les systèmes de l'art antérieur utilisent comme source froide des milieux dans lesquels la température est susceptible de varier au cours du temps.

Par exemple, dans le cas de la solution technique décrite par le document chinois introduit précédemment, il est décrit que la source froide de la pompe à chaleur est le milieu extérieur. Or, la température du milieu extérieur est susceptible de varier en fonction des périodes de l'année ou plus simplement si la pompe à chaleur est installée dans une région ou les conditions climatiques sont instables.

Un problème persiste, puisque la température de la source froide et de la source chaude utilisées par la pompe à chaleur, et plus précisément le différentiel de température entre ces sources a une influence importante sur le coefficient de performance de la pompe à chaleur, également désigné par l'acronyme COP.

Dès lors, il existe un besoin de maitriser la température de la source froide et de la source chaude et de réduire le différentiel entre lesdites sources de manière à obtenir de meilleures performances lors de l'exploitation de la pompe à chaleur.

L'invention détaillée ci-après permet de résoudre les inconvénients précités en proposant un système comprenant une pompe à chaleur et un dispositif de stockage d'énergie à changement de phase utilisé notamment comme source froide par la pompe à chaleur.

Ainsi, dans le système selon l'invention, la température de la source froide de la pompe à chaleur est liée à un composant du système. Dès lors, le coefficient de performance de la pompe à chaleur peut être optimisé grâce au contrôle de la température de la source froide.

Par ailleurs, le système selon l'invention permet de s'affranchir du besoin de surdimensionner la pompe à chaleur pour pallier les variations de températures du milieu extérieur.

### Résumé de l'invention

L'invention concerne un système comportant :
- une première pompe à chaleur comprenant un évaporateur et un condenseur, et comprenant des moyens pour acheminer un fluide frigorigène entre deux échangeurs de chaleur, ledit fluide frigorigène circulant à travers un premier circuit fermé ;
- un premier échangeur de chaleur et un second échangeur de chaleur, le premier échangeur de chaleur étant utilisé comme source froide par la pompe à chaleur, et au moins un desdits premier et second échangeurs comprenant :
   ∘ une portion du premier circuit pour acheminer le fluide frigorigène au travers dudit premier ou second échangeur ;
   ∘ une portion d'un deuxième circuit dans lequel circule un fluide secondaire, pour acheminer ledit fluide secondaire au travers dudit premier ou second échangeur,
   ∘ un matériau à changement de phase réparti dans l'échangeur de chaleur et collectant une portion d'une quantité d'énergie thermique transportée par le fluide frigorigène dans la portion du premier circuit ou par le fluide secondaire dans la portion du deuxième circuit.
- Une deuxième pompe à chaleur comprenant un évaporateur et un condenseur et comprenant un troisième circuit pour acheminer un deuxième fluide frigorigène entre l'évaporateur et le condenseur de ladite deuxième pompe à chaleur, ledit évaporateur permettant un échange calorifiques entre le deuxième fluide frigorigène et une source primaire de calories et ledit condenseur étant positionné dans le premier échangeur pour permettre un échange de calories entre d'une part le troisième fluide frigorigène et le matériau à changement de phase, et d'autre part, le troisième fluide frigorigène et le fluide secondaire.

Selon un mode de réalisation, la portion du premier circuit et la portion du deuxième circuit forment des courbes de dimensions sensiblement égales s'étendant chacune entre deux parois de l'échangeur de chaleur et formant des plaques successives définissant un volume à l'intérieur de l'échangeur de chaleur, le matériau à changement de phase étant agencé autour du volume et entre les plaques formées par le premier circuit et le deuxième circuit, pour favoriser les échanges thermiques entre d'une part le matériau à changement de phase et le fluide frigorigène, et d'autre part le matériau à changement de phase et le fluide secondaire.

Selon un mode de réalisation, le système comprend une pluralité d'éléments de stockage d'énergie comprenant le matériau à changement de phase, lesdits éléments de stockage d'énergie étant répartis dans lesdits échangeurs de chaleur et au contact de la portion du premier circuit et de la portion du second circuit pour permettre d'une part un échange calorifique entre le fluide frigorigène et le matériau à changement de phase et d'autre part un échange calorifique entre le matériau à changement de phase et le fluide secondaire.

Selon un mode de réalisation, l'évaporateur est positionné dans le premier échangeur de chaleur et le condenseur est positionné dans le second échangeur de chaleur, et le premier échangeur de chaleur et le second échangeur de chaleur comprennent chacun les éléments de stockage d'énergie qui se trouvent au contact dudit évaporateur et dudit condenseur de la première pompe à chaleur.

Selon un mode de réalisation, la portion du premier circuit du premier échangeur de chaleur et/ou du deuxième échangeur de chaleur forme des courbes de dimensions sensiblement égales.

Selon un mode de réalisation, les éléments de stockage d'énergie présentent une forme sensiblement oblongue, et comprennent une ouverture centrale permettant une insertion d'un sommet d'une courbe de la portion du premier circuit au travers desdits éléments de stockage d'énergie, de sorte à favoriser un échange calorifique entre le fluide frigorigène et le matériau à changement de phase.

Selon un mode de réalisation, le premier échangeur de chaleur ou le second échangeur de chaleur présente une forme sensiblement cylindrique, et dans lequel les éléments de stockage d'énergie sont d'une dimension sensiblement égale pour permettre un empilement desdits éléments de stockage d'énergie sur plusieurs boucles de la portion du premier circuit.

Selon un mode de réalisation, les éléments de stockage d'énergie comprennent des singularités de surface pour favoriser un écoulement turbulent du fluide secondaire.

Selon un mode de réalisation, le système comprend un dispositif de production d'énergie à vapeur comprenant au moins une machine de détente, ladite machine de détente étant alimentée par au moins une partie de l'énergie thermique stockée par le matériau à changement de phase, ledit dispositif de production d'énergie à vapeur étant apte à produire une énergie mécanique à partir de ladite machine de détente.

Selon un mode de réalisation, le premier fluide frigorigène FL₁ ou le deuxième fluide frigorigène FL₂ ou le troisième fluide frigorigène FL₃ comprend l'un des fluides réfrigérant suivant : R1336mzz-Z, R1233zd.

Un avantage est d'utiliser un fluide dont les performances sont accrues ne pouvant fonctionner simplement avec une pompe à chaleur à source thermique froide élevée.

Selon un mode de réalisation, le système comprend une technologie de type turbo compresseur pour évaluer le fluide frigorigène à une pression inférieure à 1 bar.

Selon un mode de réalisation, la source primaire de calories comprend un réseau de chaleur.

Selon un mode de réalisation, le système comprend une architecture à plusieurs étages de compression.

### Brève description des figures

D'autres caractéristiques et avantages de l'invention ressortiront à la lecture de la description détaillée qui suit, en référence aux figures annexées, qui illustrent :
- Fig.1 : une pompe à chaleur et deux échangeurs de chaleurs.
- Fig.2 : un échangeur de chaleur et un condenseur au contact d'une pluralité d'éléments de stockage d'énergie.
- Fig.3 : un échangeur de chaleur et un évaporateur au contact d'une pluralité d'éléments de stockage d'énergie.
- Fig.4 : un logigramme d'un transfert d'énergie entre les fluides secondaires et les éléments de stockage d'énergie au sein de deux échangeurs de chaleur.
- Fig.5 : un logigramme d'un transfert d'énergie entre le fluide frigorigène et les éléments de stockage d'énergie au sein de deux échangeurs de chaleur.
- Fig.6 : un système comprenant un dispositif de production d'énergie à vapeur.
- Fig.7 : un système comprenant deux échangeurs de chaleur, une pompe à chaleur et une turbine.
- Fig.8 un système comprenant un dispositif de production d'énergie à vapeur.

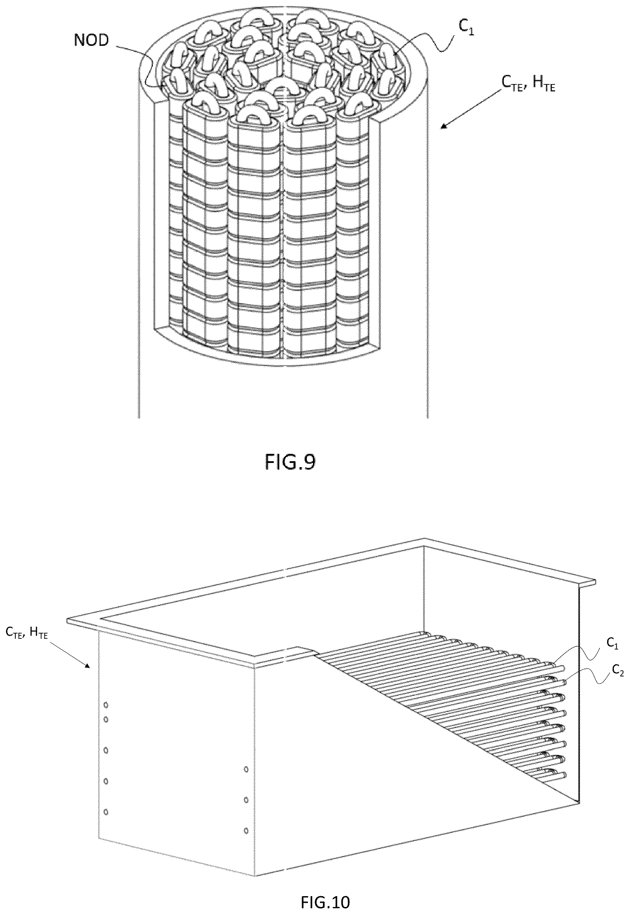

- Fig.9 : une vue d'un échangeur de chaleur présentant une forme sensiblement cylindrique, et comprenant des éléments de stockage d'énergie empilés et au contact du premier circuit dans lequel circule le fluide frigorigène.
- Fig.10: une vue d'un échangeur de chaleur présentant globalement une forme de pavé droit, et comprenant une portion du premier circuit et une portion du deuxième circuit.
- Fig.11 : une vue, à gauche, d'un élément de stockage d'énergie présentant une forme sensiblement oblongue et une surface lisse, et une vue, à droite, d'un élément de stockage d'énergie présentant des singularités.
- Fig.12 : une vue d'un élément de stockage d'énergie comportant une pluralité de singularités de formes diverses.

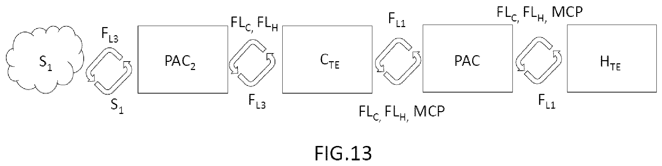

- Fig.13 : une représentation schématique du système selon l'invention, qui comprend une deuxième pompe à chaleur.

### Description détaillée

### POMPE A CHALEUR

Le système de l'invention comporte une première pompe à chaleur PAC. La pompe à chaleur PAC permet de transférer l'énergie thermique d'une source froide vers une source chaude et donc d'inverser le sens spontané du transfert de l'énergie thermique entre deux sources.

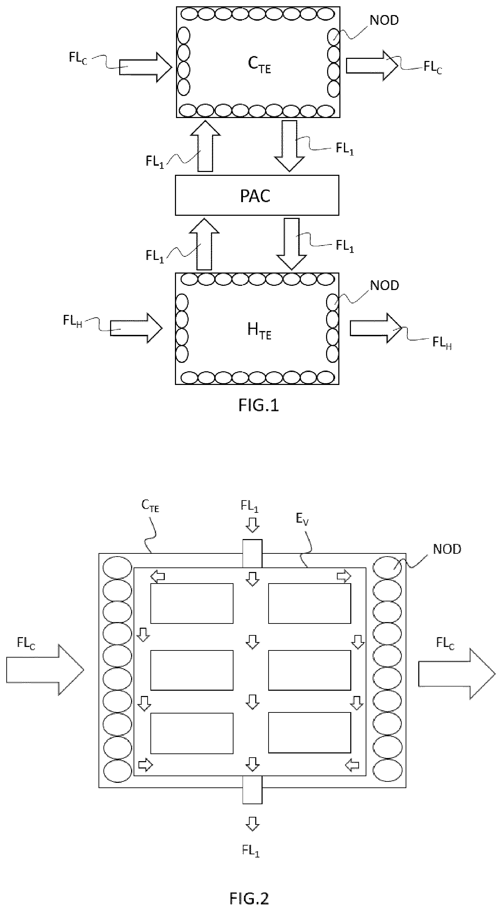

En référence à la figure 1, un système comprend la pompe à chaleur PAC, un premier échangeur de chaleur C_{TE} et un second échangeur de chaleur H_{TE}. Le premier échangeur de chaleur C_{TE} est utilisé comme source froide par la pompe à chaleur PAC et le second échangeur de chaleur H_{TE} est utilisé comme source chaude par la pompe à chaleur PAC.

Selon différents cas, le type de pompe à chaleur utilisé comprend une pompe à chaleur aérothermique telle qu'une pompe à chaleur air-air ou une pompe à chaleur air-eau, une pompe à chaleur hydrothermique telle qu'une pompe à chaleur eau-eau, une pompe à chaleur géothermique, une pompe à chaleur aquathermique, ou encore une pompe à chaleur hybride. Toutefois, le type de pompe à chaleur utilisé dans le système de l'invention ne se limite pas aux exemples précités. En effet, toute technologie de pompe à chaleur ou combinaison de technologies de pompes à chaleurs entre elles sont susceptibles d'être implémentées dans le système en fonction des cas d'usage.

Le système comprend un compresseur C_{P}, un évaporateur E_{V}, un organe de détente Dₜ également appelé « détendeur » et un condenseur C_{d}. Cela est particulièrement avantageux pour la mise en œuvre d'un cycle thermodynamique par la pompe à chaleur PAC. On désigne ici par « cycle thermodynamique » une suite de transformations successives subit par un fluide frigorigène dans un système thermodynamique, le fluide frigorigène revenant à son état initial de manière à pouvoir recommencer le cycle.

Dans la suite de la description, l'organe de détente Dₜ sera indifféremment désigné par les termes « organe de détente Dₜ » ou « détendeur Dₜ ».

Dans un mode de réalisation, la pompe à chaleur PAC est réversible. On entend par « réversible » que les fonctions du condenseur C_{d} et de l'évaporateur Eᵥ peuvent être inversées. Selon un cas d'exemple, cette réversibilité est rendue possible par la mise en œuvre d'une valve trois voies.

### Fluide frigorigène

Le système comprend un fluide frigorigène FL₁, également appelé « fluide frigorifique », « fluide caloporteur » ou encore « réfrigérant » dans la littérature technique. Dans la suite de la description, le fluide frigorigène FL₁ sera indifféremment désigné par les termes de « fluide frigorigène FL₁ », « fluide caloporteur FL₁ » ou encore « réfrigérant FL₁ ».

Le fluide frigorigène FL₁ permet d'acheminer une quantité d'énergie thermique captée dans une source froide vers une source chaude, d'où son appellation de « fluide caloporteur », en référence à la « calorie » ; une unité de mesure autrefois utilisée pour désigner une quantité de chaleur. Selon différents cas d'application, le fluide frigorigène comprend un mélange de fluides en phases liquides, un mélange de fluides en phases gazeuses, ou encore un mélange de fluides comprenant des phases liquides et gazeuses.

Le réfrigérant FL₁ est par exemple utilisé dans la pompe à chaleur pour la mise en œuvre d'un cycle thermodynamique. Dans un exemple de réalisation, le réfrigérant FL₁ circule dans un circuit fermé au travers du compresseur Cₚ, du détendeur Dt, de l'évaporateur Eᵥ et du condenseur C_{d}.

Selon plusieurs exemples, le réfrigérant FL₁ utilisé comprend des hydrofluorocarbures également désignés par l'acronyme HFC tel que le mélange zéotropique R407C, des hydrocarbures également désignés par l'acronyme HC, de l'ammoniac également désigné en tant que réfrigérant par l'appellation R717 ou encore un mélange azéotropique également appelé mélange azéotrope.

Dans un mode de réalisation préféré, le réfrigérant FL₁ comprend un dérivé fluoré des alcènes, par exemple un hydrofluoroalcène. Selon un exemple, l'hydrofluoroalcène comprend du 2,3,3,3-tétrafluoropropène également désigné par l'appellation « R-1234yf ». Un avantage est de mettre en œuvre un réfrigérant à potentiel de réchauffement global réduit et à potentiel de déplétion ozonique nul, et donc plus respectueux de l'environnement.

Toutefois, le type de réfrigérant FL₁ utilisé ne se limite pas aux exemples précités et peut également comprendre tout type de fluide ou de composé chimique susceptible d'être utilisé comme fluide frigorigène dans la mise en œuvre d'un cycle thermodynamique, par une pompe à chaleur. Le réfrigérant FL₁ utilisé peut également comprendre une combinaison de plusieurs fluides frigorigènes ou composés chimiques entre eux lorsqu'une telle combinaison s'avère pertinente pour des cas d'application spécifiques.

### PAC : COMPRESSEUR

Selon un mode de réalisation, le compresseur C_{P} est utilisé dans la mise en œuvre d'un cycle thermodynamique par la pompe à chaleur PAC. Le rôle du compresseur C_{P} est d'élever le niveau d'énergie dans le fluide frigorigène FL₁, en comprimant ce dernier. Selon un exemple, le compresseur C_{P} est situé entre le condenseur C_{d} et l'évaporateur Eᵥ dans le système.

Selon différents modes de réalisation, le compresseur C_{P} peut comprendre un compresseur volumétrique tel qu'un compresseur à vis, un compresseur à piston ou encore un compresseur à spirale également désigné par l'appellation « compresseur scroll ». Le compresseur C_{P} peut également comprendre un compresseur centrifuge ou « turbocompresseur ». Le compresseur C_{P} mis en œuvre peut être un compresseur « hermétique », ou encore un compresseur « semi-hermétique » également désigné par les appellations « hermétique accessible » ou « hermétique ouvert ». Le type de compresseur C_{P} mis en œuvre dépend notamment de la puissance de la pompe à chaleur PAC.

Le compresseur C_{P} nécessite une alimentation électrique pour fonctionner. Le coefficient de performance de la pompe à chaleur PAC ou « COP » est par ailleurs évalué par le rapport entre la consommation électrique du compresseur C_{P} et l'énergie produite par ladite pompe à chaleur PAC. Selon différents modes de réalisation, l'alimentation électrique du compresseur C_{P} peut être réalisée par un raccordement au réseau électrique, par une ou plusieurs batteries ou encore par un système d'alimentation électrique fonctionnant avec une ou plusieurs sources d'énergie renouvelable.

Selon différents exemples, le type de batteries utilisé pour alimenter le compresseur comprend les technologies lithium-ion, Ni-Cad, Ni-Mh ou Pb/Sla. Toutefois, ce mode de réalisation de l'invention n'est pas limité aux technologies de batteries précitées, et n'importe quelle technologie de batterie pourrait être mise en œuvre pour alimenter le compresseur C_{P}.

Il est également possible de combiner plusieurs technologies de batteries entre elles ou encore de coupler l'alimentation par batterie à une autre source d'alimentation électrique pour alimenter le compresseur C_{P}, par exemple avec un système fonctionnant avec une source d'énergie renouvelable

Selon plusieurs exemples, la source d'énergie renouvelable peut comprendre une source d'énergie solaire, une source d'énergie hydraulique, une source d'énergie éolienne, une source géothermique ou encore une source d'énergie par biomasse. Toutefois, dans le cadre de l'invention, les exemples précités ne sont pas limitatifs et n'importe quelle source d'énergie renouvelable pourrait être exploitée. Il est également possible d'alimenter le compresseur C_{P} en énergie électrique à partir d'une combinaison de plusieurs sources d'énergies renouvelables, ou encore par une combinaison avec un autre système d'alimentation en énergie électrique.

Selon un cas, le fluide frigorigène FL₁ circule dans le compresseur C_{P} sous forme gazeuse. Le fluide frigorigène FL₁ sous forme gazeuse est comprimé dans le compresseur C_{P} et la compression entraîne une augmentation de la pression sur le fluide frigorigène FL₁ et donc de la température dudit fluide frigorigène FL₁.

Selon un mode de réalisation, plusieurs compresseurs C_{P} sont combinés entre eux. On entend par « combinés entre eux » que plusieurs compresseurs C_{P} sont associés et que le fluide frigorigène FL₁ sous forme gazeuse traverse successivement chacun des compresseurs C_{P}. Ce mode de réalisation est particulièrement avantageux pour atteindre une pression plus élevée et donc une température également plus élevée.

### PAC : CONDENSEUR

Le système selon l'invention comprend un condenseur C_{d}. A titre d'exemple, le condenseur C_{d} reçoit le fluide frigorigène FL₁ en sortie du compresseur C_{P}. Le rôle du condenseur C_{d} est d'abaisser la température dans le fluide frigorigène FL₁ qui va atteindre sa température de condensation en se refroidissant.

Selon différents modes de réalisation, le condenseur C_{d} comprend un condenseur à air ou un condenseur à eau. Dans un exemple de réalisation, le condenseur à air comprend un condenseur à tubes à ailettes.

Selon plusieurs exemples de réalisation, le condenseur à eau comprend un condenseur à tubes coaxiaux, un condenseur à plaques brasées, un condenseur à serpentins ou encore un condenseur multitubulaire.

Selon un cas d'exemple, le fluide frigorigène FL₁ sort du compresseur C_{P} et entre sous forme gazeuse dans le condenseur C_{d}. Le fluide frigorigène FL₁ sous forme gazeuse subit alors un phénomène dit de « désurchauffe » en se refroidissant à température et à pression constantes. Le fluide frigorigène FL₁ sous forme gazeuse subit ensuite un changement d'état progressif d'un état gazeux vers un état liquide durant lequel il cède une partie de son énergie thermique sous forme de chaleur latente à l'environnement dans lequel il évolue. Lorsque le changement d'état vers l'état liquide a été complètement réalisé, le fluide frigorigène FL₁ subit un phénomène dit de « sous-refroidissement » à pression P_{FL1} constante en cédant une partie de son énergie thermique sous forme de chaleur sensible à l'environnement dans lequel il évolue.

Selon un exemple, la seconde quantité d'énergie thermique E_{H} cédée à l'environnement par le fluide frigorigène FL₁ comprend la chaleur latente de condensation du fluide frigorigène FL₁, la chaleur sensible de sous refroidissement du fluide frigorigène FL₁ et la chaleur sensible de vapeur surchauffée du fluide frigorigène FL₁.

### PAC : EVAPORATEUR

Selon un mode de réalisation, le système selon l'invention comprend un évaporateur Eᵥ. Le rôle de l'évaporateur est d'évaporer le fluide frigorigène FL₁.

Selon un exemple, le fluide frigorigène FL₁ entre au sein de l'évaporateur Eᵥ sous forme liquide et subit un changement d'état vers l'état gazeux au sein dudit évaporateur Eᵥ. Ce changement d'état induit un refroidissement du fluide frigorigène FL₁, qui va alors capter de la chaleur issue du milieu dans lequel il évolue.

Selon différents modes de réalisation, le type d'évaporateur Eᵥ mis en œuvre comprend un évaporateur dit « à détente sèche » également appelé « évaporateur à surchauffe » ou « sec », ou un évaporateur dit « noyé ».

Selon plusieurs exemples, l'évaporateur à détente sèche comprend un évaporateur multitubulaire à surchauffe, un échangeur à plaques brasées ou un évaporateur coaxial.

Selon d'autres exemples, l'évaporateur de type « noyé » comprend un échangeur multitubulaire noyé ou un échangeur à serpentin noyé. L'évaporateur E_{V} mis en œuvre peut également comprendre une combinaison de plusieurs technologies d'évaporateurs.

Selon d'autres cas, l'évaporateur E_{V} mis en œuvre comprend un évaporateur à ailettes à convection naturelle, un évaporateur à ailettes à convection forcée ou un évaporateur à tube lisse à convection naturelle.

### PAC : DETENDEUR

Le rôle de l'organe de détente Dt est d'abaisser la pression P_{FL1} du fluide frigorigène FL₁. Cet abaissement de pression est réalisé en raison de la différence de pression entre le condenseur C_{d} et l'évaporateur Eᵥ.

Dans un mode de réalisation préféré, l'organe de détente Dₜ comprend un détendeur thermostatique.

Selon un mode de réalisation, le détendeur thermostatique comprend une vanne pour réguler le débit du fluide frigorigène FL₁. Un avantage est de pouvoir contrôler la quantité de fluide frigorigène FL₁ admise dans l'évaporateur Eᵥ en sortie du détendeur. En effet, si l'évaporateur Eᵥ admet une quantité trop faible du fluide frigorigène FL₁, son efficacité diminue, et si l'évaporateur Eᵥ admet une quantité trop importante de fluide frigorigène FL₁ en sortie du détendeur Dt, il existe un risque d'endommager le compresseur Cₚ en sortie de l'évaporateur Eᵥ.

Selon plusieurs exemples, l'organe de détente Dₜ comprend un détendeur thermostatique à égalisation externe de pression ou un détendeur thermostatique à égalisateur interne de pression. Un avantage est de pouvoir adapter l'alimentation de l'évaporateur en fluide frigorigène FL₁ en fonction des cas d'usage. Un autre avantage est d'améliorer la fiabilité du système.

Selon différents modes de réalisation, l'organe de détente Dₜ comprend un détendeur à flotteur basse pression, un détendeur à flotteur haute pression, un contrôleur de niveau magnétique, un orifice calibré ou encore un détendeur électronique. Avantageusement, le type d'organe de détente Dt utilisé est choisi en fonction du système thermodynamique mis en œuvre.

### Echangeurs de chaleur

Selon un mode de réalisation, le système comprend deux échangeurs de chaleur : le premier échangeur de chaleur dit « froid » C_{TE} et le second échangeur de chaleur dit « chaud » H_{TE}. On désigne les échangeurs de chaleur C_{TE} et H_{TE} respectivement par les termes échangeur « froid » et échangeur « chaud » du fait que l'échangeur C_{TE} est utilisé pour refroidir le fluide secondaire FL_{C} et l'échangeur de chaleur H_{TE} est utilisé pour chauffer le fluide secondaire FL_{H}.

Les échangeurs de chaleur C_{TE} et H_{TE} sont désignés par le terme « échangeur » en ce qu'ils sont le lieu de différents transferts thermiques avec les fluides FL_{C}, FL_{H}, FL₁. Pour autant, les fonctions des échangeurs C_{TE} et H_{TE} ne sont pas limitées au champ sémantique du terme « échangeur » utilisé pour les désigner.

A titre d'exemple, les échangeurs de chaleur C_{TE}, H_{TE} pourront aussi bien assurer des fonctions de transferts thermiques entre plusieurs fluides ou plusieurs éléments ; que des fonctions de stockage d'énergie thermique dans le temps.

Les fluides FL_{C} et FL_{H} sont par ailleurs désignés par le terme « secondaire » pour les distinguer du fluide frigorigène FL₁. Les fluides secondaires FL_{C}, FL_{H} ont pour vocation de répondre à des besoins thermiques externes, par exemple de chauffage ou de climatisation dans un bâtiment. Ils peuvent également être utilisés dans la mise en œuvre d'un circuit secondaire dans le système.

Selon plusieurs exemples, les échangeurs de chaleur C_{TE}, H_{TE} peuvent comprendre un élément structurel de forme cubique, de forme ovoïde, de forme sphérique, ou encore de forme à base rectangulaire, par exemple celle d'une plaque. Toutefois, les formes des éléments structurels composants les échangeurs de chaleurs C_{TE}, H_{TE} ne se limitent pas aux exemples précités, et tout type de forme géométrique adaptée au système dans lequel lesdits échangeurs C_{TE}, H_{TE} sont intégrés pourrait être utilisée. Selon un exemple, les deux échangeurs C_{TE}, H_{TE} sont composés par des éléments structurels de formes géométriques différentes.

### Eléments de stockage d'énergie

Selon un mode de réalisation, l'échangeur de chaleur C_{TE} ou H_{TE} comprend un ou plusieurs éléments de stockage d'énergie NOD. Dans une variante, les deux échangeurs de chaleur C_{TE}, H_{TE} comprennent un ou plusieurs éléments de stockage d'énergie NOD.

Les éléments de stockage d'énergie NOD collectent une portion d'une quantité d'énergie thermique transportée par le fluide frigorigène FL₁ ou le fluide secondaire FL₂, FL_{H}. Les éléments de stockage d'énergie NOD comprennent un matériau à changement de phase MCP. Il s'agit par exemple de paraffine. Les éléments de stockage d'énergie NOD sont répartis dans les échangeurs de chaleur C_{TE}, H_{TE} et au contact d'une portion du premier circuit C₁ dans lequel circule le fluide frigorigène FL₁.

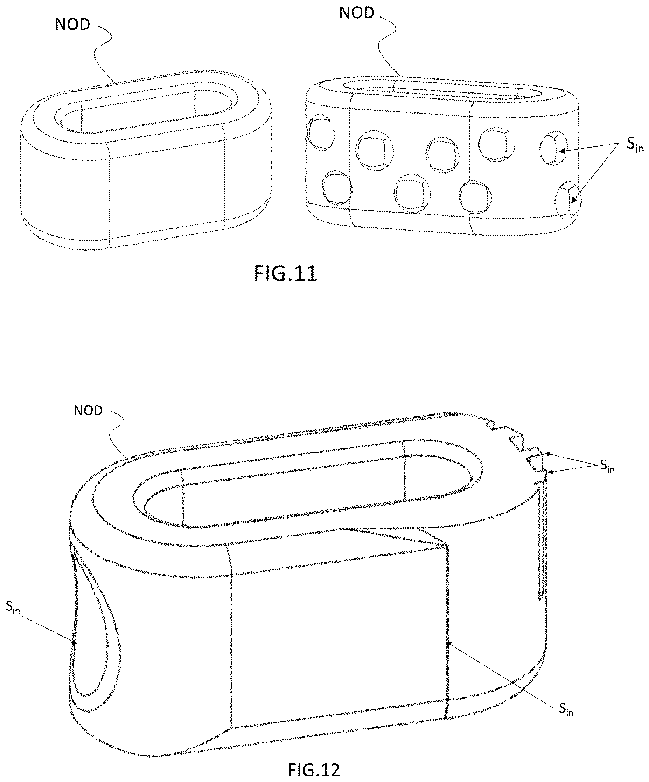

Selon un mode de réalisation, en référence à la figure 11, les éléments de stockage d'énergie NOD présentent une forme sensiblement oblongue. Cette forme est particulièrement avantageuse pour favoriser les échanges thermiques entre le matériau à changement de phase MCP et pour favoriser une répartition homogène des éléments de stockage d'énergie NOD dans les échangeurs de chaleur C_{TE}, H_{TE}.

Selon un mode de réalisation, en référence à la figure 11, les éléments de stockage d'énergie NOD présentent des singularités Sᵢ. On entend par « singularités » des modifications locales de la forme surfacique des éléments de stockage d'énergie NOD. Les singularités Sᵢ prennent par exemple des formes diverses telles des excroissances locales ou des aspérités locales, ou encore des formes creusées dans la surface de l'élément de stockage d'énergie NOD. Les singularités prennent par exemple une forme d'ailettes, ou encore de saillie sensiblement demi-sphérique. Les singularités Sᵢ permettent de favoriser un écoulement particulier du fluide secondaire FL_{C}, FL_{H} le long des éléments de stockage d'énergie NOD, par exemple un écoulement turbulent.

Selon un mode de réalisation, les éléments de stockage d'énergie NOD présentent une ouverture. L'ouverture est par exemple localisée au centre des éléments de stockage d'énergie. Un avantage de l'ouverture est de permettre l'empilement des éléments de stockage d'énergie NOD sur la portion du premier circuit du premier échangeur C₁ ou la portion du deuxième circuit du deuxième échangeur C₂. Cet empilement permet avantageusement de favoriser les échanges thermiques entre, d'une part le matériau à changement de phase MCP et le fluide frigorigène FL₁, et d'autre part le matériau à changement de phase MCP et le fluide secondaire FL_{C}, FL_{H}.

Selon un mode de réalisation, au moins un échangeur de chaleur C_{TE}, H_{TE} présente une forme sensiblement cylindrique. Un avantage est de favoriser l'écoulement des fluides à travers l'échangeur de chaleur. Un autre avantage est de favoriser la répartition des éléments de stockage d'énergie dans l'échangeur de chaleur.

Selon un mode de réalisation, les éléments de stockage d'énergie NOD sont au contact d'une portion du second circuit C₂ dans lequel circule le fluide secondaire FL_{C}, FL_{H}.

Selon un mode de réalisation, la portion du premier circuit (C₁) et la portion du second circuit (C₂) forme des courbes dans le premier échangeur de chaleur (C_{TE}) et/ou dans le deuxième échangeur de chaleur (H_{TE}). Les courbes s'étendent par exemple d'une paroi de l'échangeur de chaleur à une paroi opposées dudit échangeur de chaleur. Les courbes forment par exemple des « boucles » espacées les unes des autres dans lequel circule le fluide frigorigène FL₁ ou le fluide secondaire FL_{C}, FL_{H}

Selon un mode de réalisation, la portion du premier circuit (C₁) et la portion du second circuit (C₂) forment des plaques superposées successivement dans l'échangeur de chaleur C_{TE}, H_{TE}. Les plaques successives sont par exemple séparées par le matériau à changement de phase (MCP).

Selon un exemple, les éléments de stockage d'énergie NOD sont configurés pour échanger de l'énergie, par exemple une quantité d'énergie E_{C} sous forme de chaleur, avec le fluide frigorigène FL₁, ou avec le fluide secondaire FL_{C}.

Selon un mode de réalisation, les échangeurs de chaleur C_{TE}, H_{TE} comprennent une ou plusieurs parois adiabatiques. On entend par « paroi » de l'échangeur de chaleur C_{TE} ou H_{TE} toute surface délimitant l'intersection entre une zone intérieure de l'échangeur de chaleur C_{TE} ou H_{TE} et le milieu extérieur. Ce mode de réalisation est particulièrement avantageux pour limiter les échanges de chaleur entre la zone intérieure des échangeurs de chaleur C_{TE}, H_{TE} et le milieu extérieur, et par conséquent pour améliorer l'efficacité énergétique du système.

On entend par « zone intérieure » de l'échangeur de chaleur C_{TE} ou H_{TE} la zone dans laquelle ont lieu les échanges thermiques entre les différents fluides FL₁, FL_{C}, FL_{H} et les éléments de stockage d'énergie NOD, ladite zone intérieure étant délimitée par les parois dudit échangeur de chaleur C_{TE} ou H_{TE}.

On entend par milieu « extérieur » toute zone se trouvant en dehors de la zone « intérieure » de l'échangeur de chaleur C_{TE} ou H_{TE} délimitée par les parois dudit échangeur C_{TE} ou H_{TE}.

On entend par « adiabatique » que la paroi de l'échangeur de chaleur C_{TE} ou H_{TE} comprend un matériau dont les propriétés permettent de limiter les échanges thermiques entre le milieu intérieur de l'échangeur de chaleur C_{TE} ou H_{TE} et le milieu extérieur, ou encore que les dimensions de la paroi permettent de limiter les transferts thermiques entre la zone intérieure et le milieu extérieur, ou une combinaison de ces deux propriétés.

Selon un mode de réalisation, au moins un des échangeurs de chaleur C_{TE}, H_{TE} comprend une pluralité d'éléments de stockage d'énergie NOD répartis uniformément dans la zone intérieure desdits échangeurs de chaleur C_{TE}, H_{TE}. Ce mode de réalisation est avantageux pour optimiser les échanges thermiques au sein de l'échangeur C_{TE} ou H_{TE} entre les éléments de stockage d'énergie NOD et les différents fluides FL₁, FL_{H}, FL_{C}. Selon une variante, les éléments de stockage d'énergie NOD sont agencés de manière désorganisée dans les échangeurs de chaleur C_{TE}, H_{TE}. Par « désorganisée », on entend que la répartition des éléments de stockage d'énergie NOD ne respecte pas une quelconque logique géométrique d'agencement.

Selon un mode de réalisation préféré, les éléments de stockage d'énergie NOD comprennent au moins un matériau à changement de phase. Le matériau à changement de phase comprend par exemple un mélange de corps purs tel qu'un mélange eutectique. On entend par mélange eutectique un mélange de corps purs qui change de phase à température constante de manière uniforme.

Un avantage est de pouvoir transmettre une quantité d'énergie thermique vers un fluide secondaire, par exemple sous forme de chaleur latente, par changement de phase du mélange eutectique. De plus, la mise en œuvre d'un mélange eutectique est particulièrement avantageuse dans le cas de l'utilisation d'un des échangeurs C_{TE}, H_{TE} comme source par la pompe à chaleur PAC, par exemple dans le cas de l'utilisation du premier échangeur de chaleur C_{TE} comme source froide. En effet, le coefficient de performance de la pompe à chaleur est dépendant de la température des sources et plus spécifiquement du différentiel de température entre la source chaude et la source froide. Le fait de fixer les températures des sources dans le temps permet de réduire ce différentiel et donc d'améliorer les performances de la pompe à chaleur PAC.

Selon une variante, le matériau à changement de phase comprend un mélange péritectique. Selon un autre exemple, le matériau à changement de phase est configuré pour mettre en œuvre au moins une transformation eutectoïde.

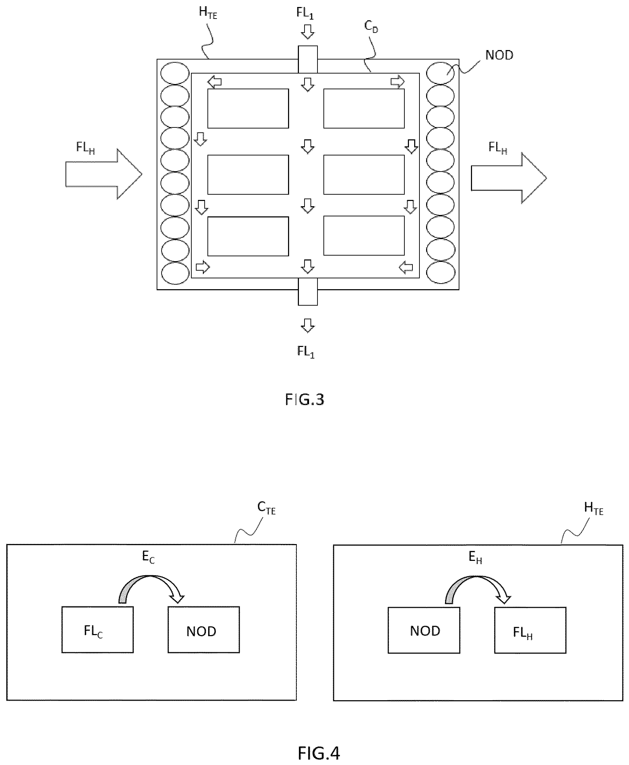

Selon un mode de réalisation, en référence à la figure 3, le premier échangeur de chaleur C_{TE} comprend l'évaporateur Eᵥ de la pompe à chaleur PAC. On entend que le premier échangeur de chaleur C_{TE} « comprend » l'évaporateur Eᵥ par le fait que l'évaporateur Eᵥ de la pompe à chaleur PAC est situé dans la zone intérieure du premier échangeur de chaleur C_{TE}. Ce mode de réalisation est particulièrement avantageux en ce qu'il permet des transferts d'énergie entre le fluide frigorigène FL₁ circulant au sein de l'évaporateur Eᵥ et les dispositifs de stockage d'énergie NOD se trouvant dans le premier échangeur de chaleur C_{TE}.

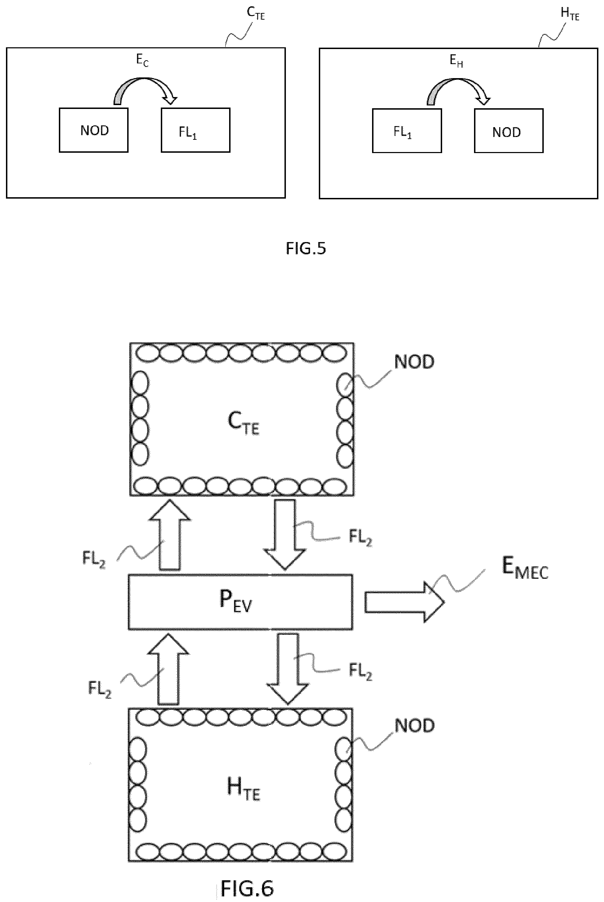

Selon un cas d'exemple, le fluide frigorigène FL₁ circule dans l'évaporateur Eᵥ situé dans le premier échangeur de chaleur C_{TE} et subit un changement d'état en passant d'un premier état liquide à un second état gazeux par un phénomène d'évaporation. En référence à la figure 5, le changement d'état du fluide frigorigène FL₁ provient d'un échange thermique entre les éléments de stockage d'énergie NOD situés dans le premier échangeur de chaleur C_{TE} et le fluide frigorigène FL₁. En effet, le fluide frigorigène FL₁ capte une partie de l'énergie contenue dans les éléments de stockage d'énergie NOD qui se « rechargent en froid » lors par cet échange thermique. En référence à la figure 4, le fluide secondaire FL_{C} circulant dans l'échangeur de chaleur C_{TE} va ensuite se refroidir au contact des éléments de stockage d'énergie NOD en transmettant une partie E_{C} de son énergie thermique auxdits éléments de stockage d'énergie NOD. Le fluide secondaire FL_{C} qui se refroidit au contact des éléments de stockage d'énergie NOD comprend par exemple de l'air ou de l'eau. Dans le cadre de cet exemple, le fluide secondaire FL_{C} ainsi refroidi peut ensuite être avantageusement utilisé dans des applications de climatisation au sein d'un bâtiment.

Selon un mode de réalisation, en référence à la figure 2, le second échangeur de chaleur H_{TE} comprend le condenseur C_{D} de la pompe à chaleur. On entend que le second échangeur de chaleur H_{TE} « comprend » le condenseur C_{d} par le fait que le condenseur C_{d} de la pompe à chaleur PAC est situé dans la zone intérieure du second échangeur de chaleur H_{TE}. Ce mode de réalisation est particulièrement avantageux en ce qu'il permet des transferts d'énergie entre le fluide frigorigène FL₁ circulant au sein du condenseur C_{d} et les éléments de stockage d'énergie NOD se trouvant dans le second échangeur de chaleur H_{TE}.

Selon un cas d'exemple, le fluide frigorigène FL₁ circule dans le condenseur C_{d} situé dans l'échangeur de chaleur H_{TE} et subit un changement d'état en passant d'un premier état gazeux à un second état liquide par un phénomène de condensation. Le changement d'état du fluide frigorigène FL₁ provient d'un échange thermique entre les éléments de stockage d'énergie NOD situés dans le second échangeur de chaleur H_{TE} et le fluide frigorigène FL₁. En effet, le fluide frigorigène FL₁ cède une partie de son énergie thermique E_{H} aux éléments de stockage d'énergie NOD qui se « rechargent en chaud » lors par cet échange thermique. Le fluide secondaire FL_{H} circulant dans le second échangeur de chaleur H_{TE} va ensuite se réchauffer au contact des éléments de stockage d'énergie NOD qui transmettant une partie E_{H} de leur énergie thermique audit fluide secondaire FL_{H}. Le fluide secondaire FL_{H} qui se réchauffe au contact des éléments de stockage d'énergie NOD comprend par exemple de l'air ou de l'eau. Dans le cadre de cet exemple, le fluide secondaire FL_{H} ainsi chauffé peut ensuite avantageusement être utilisé dans des applications de chauffage au sein d'un bâtiment, par exemple le chauffage du bâtiment en lui-même ou le chauffage d'eau chaude sanitaire.

Selon un cas, la quantité d'énergie thermique E_{c} est sensiblement égale à la quantité d'énergie thermique E_{H}. Un avantage est que la majorité de l'énergie prélevée par le fluide frigorigène FL₁ à la source froide est restituée à la source chaude. Selon un autre cas, les valeurs des quantités d'énergie thermique E_{C} et E_{H} sont différentes, par exemple en raison de pertes thermiques par le fluide frigorigène FL₁ entre la source froide et la source chaude.

Selon un mode de réalisation, les échangeurs de chaleurs C_{TE}, H_{TE} comprennent une interface d'échange avec le milieu extérieur. Selon un cas, l'interface comprend par exemple un échangeur de chaleur et un dispositif tournant tel qu'un ventilateur. Un avantage est de pouvoir récupérer une quantité de chaleur depuis le milieu extérieur, par exemple une quantité de chaleur dans l'air du milieu extérieur, pour recharger les éléments de stockage d'énergie NOD des échangeurs de chaleur H_{TE} ou C_{TE}.

Selon un mode de réalisation, le second échangeur de chaleur H_{TE} comprend des moyens de récupération d'une quantité de chaleur fatale. La chaleur fatale est par exemple issue d'un site industriel. Un avantage est de pouvoir augmenter l'énergie thermique contenue dans les éléments de stockage d'énergie NOD du second échangeur de chaleur H_{TE} en valorisant une quantité de chaleur issue d'une autre installation.

Dans un mode de réalisation, au moins un des échangeurs de chaleur (C_{TE}, H_{TE}) comprend un matériau à changement de phase. Selon un cas, le matériau à changement de phase étant en contact avec un échangeur au sein duquel circule le fluide frigorigène (FL₁) ou un échangeur au sein duquel circule l'un des fluides secondaire (FI_{C}, FI_{H}). On parle ici d'un échangeur au sein duquel circule l'un des fluides (FL₁, FL_{C}, FL_{H}) et permettant la mise en œuvre d'échange thermiques avec lesdits fluides.

### Dispositif de production d'énergie à vapeur

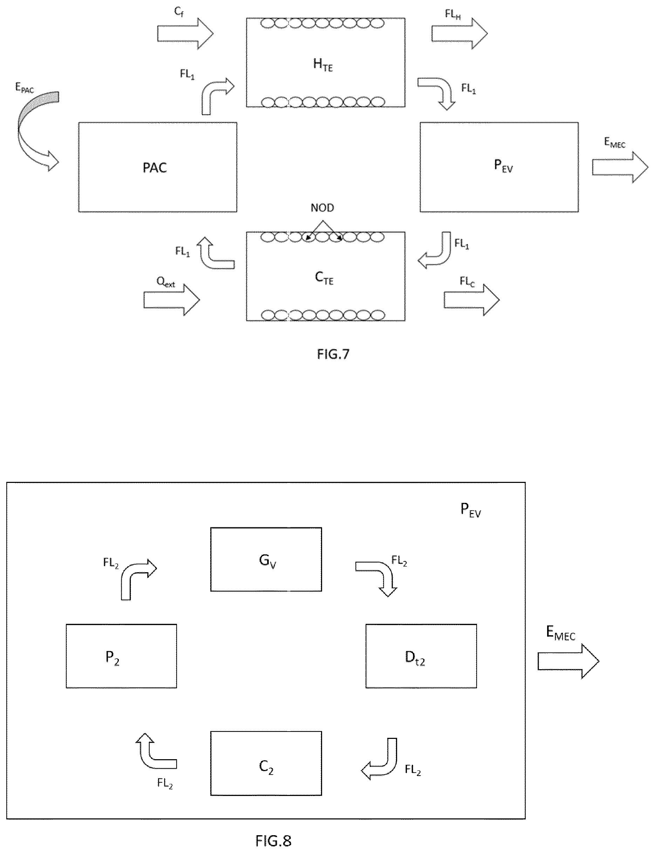

Selon un mode de réalisation, en référence à la figure 7, le système de l'invention comprend un dispositif de production d'énergie à vapeur P_{EV}. On entend par dispositif de production d'énergie « à vapeur » que la production d'énergie par le dispositif est réalisée par conversion de l'énergie thermique contenue dans une quantité donnée de vapeur circulant dans ledit dispositif, en une autre quantité d'énergie, par exemple mécanique ou électrique.

Selon un mode de réalisation, en référence à la figure 8, le dispositif de production d'énergie à vapeur P_{EV} comprend un générateur de vapeur G_{V}, une seconde pompe P₂, une machine de détente Dₜ₂ et un second condenseur C₂. On parle d'un « second » condenseur C₂ dans le but de le distinguer du condenseur C_{d} décrit précédemment pour la mise en œuvre d'un ou plusieurs cycles plus classiques de la pompe à chaleur PAC. Dans la suite de la description, on pourra désigner la machine de détente « Dₜ₂ » par le terme « turbine Dₜ₂ » pour faire référence à la même machine de détente.

Nous allons à présent décrire plus en détail le fonctionnement du dispositif de production d'énergie à vapeur P_{EV} ainsi que les différents éléments pouvant faire partie dudit dispositif lorsqu'il fait partie du système de l'invention.

En référence à la figure 6, le dispositif de production d'énergie à vapeur P_{EV} permet de mettre en œuvre un cycle de production d'énergie à vapeur. Un tel cycle permet, notamment grâce au différentiel d'énergie thermique entre une source chaude et une source froide, de produire la quantité d'énergie mécanique E_{MEC}. Dans ce cycle, on utilise un fluide condensable qui est refroidi par la source froide à une pression et une température suffisante pour qu'il soit entièrement liquéfié avant compression. Dans ces conditions, le travail de compression devient quasiment négligeable devant le travail de détente. Le liquide comprimé est vaporisé et éventuellement surchauffé par échange thermique avec la source chaude, puis détendu et condensé. L'état diphasique du fluide lors des phases de condensation et de vaporisation est très favorable pour les échanges de chaleur. Dans un exemple, l'énergie mécanique E_{MEC} produite permet ensuite d'entraîner un alternateur ou un générateur pour produire une quantité d'énergie électrique.

Selon différents exemples de réalisation, le dispositif de production d'énergie à vapeur P_{EV} est configuré pour mettre en œuvre différents types de cycles de production d'énergie à vapeur. Selon différents exemples, les cycles mis en œuvre par le dispositif de production d'énergie à vapeur P_{EV} comprennent :
- Un cycle organique de Rankine notamment adapté pour la production d'énergie mécanique à partir d'une source chaude à moyenne ou basse température ;
- Un cycle de Hirn ;
- Un cycle à régénération et réchauffe ;
- Un cycle supercritique tel qu'un cycle supercritique au CO₂ ;
- Un cycle de Kalina qui présente un glissement de température important ;
- Une association de plusieurs cycles entre eux pour créer des cycles combinés.

Toutefois, le type de cycle de production d'énergie à vapeur utilisé dans le système de l'invention ne se limite pas aux exemples précités. En effet, toute technologie de cycle de production d'énergie à vapeur ou encore toute combinaison de technologies de cycle de production d'énergie à vapeur entre elles sont susceptibles d'être implémentées dans le système en fonction des cas d'usage.

### Dispositif de production d'énergie à vapeur : 2^{nd} réfrigérant

Selon un mode de réalisation, le dispositif de production d'énergie à vapeur P_{EV} comprend un second fluide frigorigène FL₂. On parle ici d'un « second » fluide frigorigène FL₂ pour le distinguer du premier fluide frigorigène FL₁ décrit précédemment dans la mise en œuvre de cycles thermodynamiques par la pompe à chaleur PAC. On entend par « le dispositif de production d'énergie à vapeur comprend un second fluide frigorigène FL₂ », que le second fluide frigorigène FL₂ circule au sein d'un circuit fermé dans ledit dispositif de production d'énergie à vapeur P_{EV}. Dans la suite de la description, on désignera indistinctement le second fluide frigorigène FL₂ par les termes « second réfrigérant FL₂ » ou « second fluide caloporteur FL₂ » pour désigner le même fluide.

Le second fluide frigorigène FL₂ permet d'acheminer une quantité d'énergie thermique d'une source chaude vers une source froide. Selon divers modes de réalisation, le fluide frigorigène FL₂ comprend un mélange de fluides en phases liquides, un mélange de fluides en phases gazeuses ou encore un mélange de fluides comprenant des phases liquides et gazeuses.

Selon un mode de réalisation, le fluide frigorigène FL₁ et le second fluide frigorigène FL₂ mis en œuvre dans le système sont de même nature. Dans une variante, les fluides frigorigènes FL₁ et FL₂ sont de nature différente.

On entend que les fluides frigorigènes FL₁ et FL₂ sont « de nature différente » aussi bien lorsque lesdits fluides FL₁ et FL₂ se trouvent dans des états physiques différents (par exemple un des fluides comprenant un mélange de fluides en phases gazeuses et un des fluides comprenant un mélange de fluides en phases liquides) ; que lorsque ces fluides comprennent des composés chimiques différents (par exemple lorsque l'un des fluides comprend un hydrofluoroalcène et que l'autre fluide comprend un hydrofluorocarbure.) Un avantage est de pouvoir adapter le type de fluide frigorigène mis en œuvre dans les différents circuits fermés selon les cas d'applications, notamment pour optimiser les performances du système.

Selon différents exemples, le second fluide frigorigène FL₂ comprend des hydrofluorocarbures également désignés par l'acronyme HFC tel que le mélange zéotropique R407C, des hydrocarbures également désignés par l'acronyme HC, de l'ammoniac également désigné en tant que réfrigérant par l'appellation R717 ou encore un mélange azéotropique également appelé mélange azéotrope.

Dans un mode de réalisation préféré, le second réfrigérant FL2 comprend un dérivé fluoré des alcènes, par exemple un hydrofluoroalcène. Selon un exemple, l'hydrofluoroalcène comprend du 2,3,3,3-tétrafluoropropène également désigné par l'appellation « R-1234yf ». Un avantage est de mettre en œuvre un réfrigérant à potentiel de réchauffement global réduit et à potentiel de déplétion ozonique nul, et donc plus respectueux de l'environnement.

Toutefois, le type de second réfrigérant FL₂ utilisé ne se limite pas aux exemples précités et peut également comprendre tout type de fluide ou de composé chimique susceptible d'être utilisé comme fluide frigorigène dans la mise en œuvre d'un second cycle de production d'énergie à vapeur.

Dans un mode de réalisation, en référence à la figure 8, le second réfrigérant FL₂ circule dans un circuit fermé au contact d'au moins un des échangeurs de chaleur C_{TE}, H_{TE}. Un échange thermique est alors possible entre le second réfrigérant FL₂ et un des échangeurs de chaleur C_{TE}, H_{TE}.

Dans un exemple, le second réfrigérant FL₂ circule dans un circuit fermé et un transfert thermique a lieu entre ledit second réfrigérant FL₂ et un matériau à changement de phase contenu dans l'un des échangeurs C_{TE}, H_{TE} De cet échange thermique, il résulte une augmentation ou une diminution de la quantité d'énergie thermique contenue dans le second fluide frigorigène FL₂. Cela est particulièrement avantageux pour la mise en œuvre d'un second cycle de production d'énergie, notamment pour la récupération de l'énergie thermique contenue dans l'un desdits échangeurs de chaleur C_{TE}, H_{TE}.

### Dispositif de production d'énergie à vapeur : Pompe P₂

Selon un mode de réalisation, le dispositif de production d'énergie à vapeur P_{EV} comprend une pompe P₂, dénommée dans la suite de la description : seconde pompe P₂. La seconde pompe P₂ est avantageusement utilisée dans le système pour la mise en œuvre d'un cycle thermodynamique par le dispositif de production d'énergie à vapeur.

Dans divers modes de réalisation, la seconde pompe P₂ comprend une pompe volumétrique tel qu'une pompe à vis, une pompe à piston ou encore une pompe centrifuge ou « turbopompe ». Toutefois, les exemples précités ne le sont qu'à titre indicatif, et tout type de pompe adaptée pour fonctionner au sein du dispositif de production d'énergie à vapeur est susceptible d'être mise en œuvre dans le système de l'invention. Le type de seconde pompe P₂ mis en œuvre dépend notamment de la puissance du cycle de production d'énergie à vapeur mis en œuvre par le dispositif. Avantageusement, la seconde pompe P₂ est agencée dans le système de sorte que les échanges avec l'environnement sont minimes.

Selon un mode de réalisation, la seconde pompe P₂ est à débit variable. Avantageusement, le débit de la seconde pompe P₂ peut être adapté, par exemple pour tenir compte des pertes de charges réelles du système en continu et ainsi obtenir de meilleures performances.

La seconde pompe P₂ nécessite une alimentation électrique pour fonctionner. Selon différents modes de réalisation, l'alimentation électrique de la seconde pompe P₂ peut être réalisée par un raccordement au réseau électrique, par une ou plusieurs batteries ou encore par un système d'alimentation électrique fonctionnant avec une ou plusieurs sources d'énergie renouvelable.

Selon différents exemples, le type de batteries utilisé pour alimenter le compresseur comprend les technologies lithium-ion, Ni-Cad, Ni-Mh ou Pb/Sla. Toutefois, ce mode de réalisation de l'invention n'est pas limité aux technologies de batteries précitées, et n'importe quelle technologie de batterie pourrait être mise en œuvre pour alimenter la seconde pompe P₂.

Selon plusieurs exemples, la source d'énergie renouvelable peut comprendre une source d'énergie solaire, une source d'énergie hydraulique, une source d'énergie éolienne, une source géothermique ou encore une source d'énergie par biomasse. Toutefois, dans le cadre de l'invention, les exemples précités ne sont pas limitatifs et n'importe quelle source d'énergie renouvelable pourrait être exploitée. Il est également possible d'alimenter la seconde pompe P₂ en énergie électrique à partir d'une combinaison de plusieurs sources d'énergies renouvelables, ou encore par une combinaison avec un autre système d'alimentation en énergie électrique.

### Dispositif de production d'énergie à vapeur : Condenseur

Selon un mode de réalisation, le dispositif de production d'énergie à vapeur P_{EV} comprend un second condenseur C₂. Le rôle du second condenseur C₂ est de faire subir un changement d'état au second fluide frigorigène FL₂ qui cédera alors une partie de son énergie thermique sous forme de chaleur latente et de chaleur sensible à son environnement.

Selon un cas d'exemple, le second fluide frigorigène FI₂ arrive en sortie de la machine de détente Dₜ₂ et entre dans le second condenseur C₂ sous forme gazeuse. Le second fluide frigorigène FI₂ sous forme gazeuse subit alors un phénomène dit de « désurchauffe » en se refroidissant à température et à pression constantes. Le second fluide frigorigène FI₂ sous forme gazeuse subit ensuite un changement d'état progressif d'un état gazeux vers un état liquide durant lequel il cède une partie de son énergie thermique sous forme de chaleur latente à l'environnement dans lequel il évolue. Lorsque le changement d'état vers l'état liquide a été complètement réalisé, le second fluide frigorigène FI₂ subit un phénomène dit de « sous-refroidissement » à pression constante en cédant une partie de son énergie thermique sous forme de chaleur sensible à l'environnement dans lequel il évolue.

Selon un exemple, la quantité d'énergie thermique cédée à l'environnement par le second fluide frigorigène FI₂ comprend la chaleur latente de condensation, la chaleur sensible de sous-refroidissement et la chaleur sensible de vapeur surchauffée dudit second fluide frigorigène FI₂.

Dans un mode de réalisation, la chaleur cédée par le second fluide frigorigène FI₂ lors de son changement d'état au sein du second condenseur C₂ est stockée au sein d'un des échangeurs de chaleur H_{TE}, C_{TE}. Un avantage est de valoriser au sein du système la chaleur cédée par le second fluide frigorigène FI₂.

### Dispositif de production d'énergie à vapeur : générateur de vapeur

Dans un mode de réalisation, le dispositif de production d'énergie à vapeur P_{EV} comprend un générateur de vapeur G_{V}. Le rôle du générateur de vapeur G_{V} est de faire subir un changement d'état au second fluide frigorigène FI₂, d'un état liquide vers un état gazeux.

Selon un cas d'exemple, le second fluide frigorigène FI₂ entre au sein du générateur de vapeur G_{V} sous forme liquide et subit un changement d'état vers l'état gazeux au sein dudit générateur de vapeur G_{V}. Ce changement d'état induit un refroidissement du second fluide frigorigène FI₂, qui va alors capter de la chaleur issue du milieu dans lequel il évolue.

Selon différents modes de réalisation, le type de générateur de vapeur G_{V} mis en œuvre comprend un évaporateur dit « à détente sèche » également appelé « évaporateur à surchauffe » ou « sec », ou un évaporateur dit « noyé ».

Selon plusieurs exemples, l'évaporateur à détente sèche comprend un évaporateur multitubulaire à surchauffe, un échangeur à plaques brasées ou un évaporateur coaxial.

Selon d'autres exemples, l'évaporateur de type « noyé » comprend un échangeur multitubulaire noyé ou un échangeur à serpentin noyé. L'évaporateur mis en œuvre peut également comprendre une combinaison de plusieurs technologies d'évaporateurs.

Selon d'autres cas, le générateur de vapeur Gv mis en œuvre comprend un évaporateur à ailettes à convection naturelle, un évaporateur à ailettes à convection forcée ou un évaporateur à tube lisse à convection naturelle.

### Dispositif de production d'énergie à vapeur : machine de détente

Dans un mode de réalisation, le dispositif de production d'énergie à vapeur P_{EV} comprend une machine de détente Dₜ₂, également appelée turbine D_{T2}. La turbine Dₜ₂ est mise en œuvre dans le système pour produire la quantité d'énergie mécanique E_{MEC} à partir de l'énergie apportée par le second fluide frigorigène FI₂. Cette production d'énergie mécanique E_{MEC} est notamment rendue possible en raison de la différence de pression entre le générateur de vapeur G_{V} et le second condenseur C₂.

Selon différents modes de réalisation, la machine de détente Dₜ₂ comprend une turbine à contre-pression, une turbine condensation, une turbine à soutirage et contre-pression ou encore une turbine à soutirage et condensation. Selon d'autres cas, le type de turbine Dₜ₂ mis en œuvre comprend une turbine à action ou encore une turbine à réaction. Le type de turbine mis en œuvre n'est toutefois pas limité aux exemples précités, qui ne le sont qu'à titre indicatif, et tout type de machine de détente Dₜ₂ est susceptible d'être mis en œuvre dans le système selon les cas d'application.

Dans un mode de réalisation, le système comprend un alternateur ou un générateur. L'alternateur ou le générateur est par exemple couplé avec la machine de détente Dₜ₂. Un tel accouplement entre une turbine et un alternateur est également connu dans la littérature sous le nom de « turboalternateur ». Un avantage est de produire une quantité d'énergie électrique à partir de la puissance mécanique issue de la machine de détente Dₜ₂.

Dans un mode de réalisation, le dispositif de production d'énergie à vapeur est pilotable par des moyens de contrôle.

Dans un mode de réalisation, le système comprend un dispositif de stockage d'énergie électrique. Le rôle d'un tel dispositif de stockage d'énergie électrique est de stocker l'énergie électrique issue de l'entraînement de l'alternateur par la turbine Dₜ₂. Selon différents cas, le dispositif de stockage d'énergie électrique peut comprendre une ou plusieurs batteries. Les batteries peuvent être de même technologie ou encore de technologies différentes.

Selon différents exemples, le dispositif de stockage d'énergie électrique comprend un montage de plusieurs batteries en série ou encore un montage de plusieurs batteries en parallèles voire un montage couplant des batteries montées en série et des batteries montées en parallèle. Selon différents exemples, les technologies de batteries mises en jeu comprennent des technologies lithium-ion, Ni-Cad, Ni-Mh ou Pb/Sla. Toutefois, ce mode de réalisation de l'invention n'est pas limité aux technologies de batteries précitées, et n'importe quelle technologie de batterie pourrait être mise en œuvre pour stocker l'énergie électrique issue de l'entraînement de l'alternateur par la turbine Dₜ₂.

Dans un mode de réalisation, au moins une partie de l'énergie électrique produite par le couplage de ladite machine de détente Dₜ₂ avec un alternateur est utilisée pour alimenter la pompe à chaleur PAC.

### Capteurs, calculateur et mémoire

Selon un mode de réalisation, le système comprend des capteurs. Selon différents cas, les capteurs peuvent être des capteurs de pression, des capteurs de température, ou encore des capteurs de débits ou débitmètres. Plus généralement, le système est susceptible de comprendre tout type de capteur permettant de mesurer, en différents points, des grandeurs physiques associées aux différents fluides FL_{C}, FL_{H}, FL₁ qui circulent dans le système. Les capteurs utilisés peuvent également comprendre tout type de capteur permettant de mesurer des grandeurs physiques propres à l'environnement dans lequel évoluent lesdits fluides ou au milieu extérieur.

Selon un mode de réalisation, le système comprend une mémoire. Selon un exemple, la mémoire permet notamment d'enregistrer les paramètres physiques mesurés par les différents capteurs dans le système.

Selon un cas, la mémoire est accessible par un utilisateur, par exemple au moyen d'une interface utilisateur, soit pour récupérer des informations enregistrées dans ladite mémoire, soit pour y enregistrer des informations telles que par exemple des valeurs seuil.

Selon un mode de réalisation, le système comprend un calculateur. Selon un cas, le calculateur est configuré pour communiquer avec la mémoire du système pour récupérer des valeurs stockées dans la mémoire du système. Différents calculs peuvent ensuite être mis en œuvre par le calculateur. Les calculs comprennent par exemple des comparaisons entre différentes valeurs d'état du système, comme les températures ou les pressions des fluides FL₁, FL_{H}, FL_{C} en différents points dans le système, ou encore des comparaisons de ces valeurs avec des valeurs seuil préalablement paramétrées par un utilisateur.

Dans un mode de réalisation, le système comprend une interface de communication. Dans un exemple, l'interface de communication permet à la mémoire du système de communiquer avec un autre équipement connecté, par exemple un équipement d'un réseau de données.

Un avantage est de pouvoir échanger des données entre l'équipement d'un réseau de données et la mémoire du système, par exemple dans le cadre d'une connexion bidirectionnelle. Un autre avantage est de pouvoir vider la mémoire du système. Un autre avantage est de pouvoir récupérer des données stockées sur un serveur, par exemple de nouvelles valeurs seuil.

### Moyens de contrôle

Selon un mode de réalisation, le système comprend des moyens de contrôle 3. L'intérêt des moyens de contrôle 3 est de pouvoir piloter différents équipements du système. Les équipements du système comprennent par exemple des vannes d'ouverture pour augmenter ou diminuer le débit d'un des fluides FL₁, FL_{C}, FL_{H} circulant dans le système.

Dans un mode de réalisation, les moyens de contrôle 3 sont configurés pour piloter un équipement du système à partir de la mise en œuvre d'un calcul par le calculateur. Le calcul comprend par exemple une comparaison entre différentes valeurs d'état du système ou encore la comparaison de valeurs d'état du système avec une ou plusieurs valeurs seuil. Les équipements du système pilotés par les moyens de contrôle 3 sont par exemple des vannes d'ouverture ou des actionneurs.

Selon un cas, les moyens de contrôle comprennent un organe de commande pour basculer la source d'alimentation de la pompe à chaleur PAC. Selon un exemple, les températures d'au moins deux fluides parmi les fluides FL_{C}, FL_{H}, FL₁ circulant dans le système sont mesurées en différents points. Les valeurs mesurées sont ensuite comparées entre elles ou avec des valeurs seuil par le calculateur. L'organe de commande permet alors de basculer la source d'alimentation de la pompe à chaleur PAC, par exemple du secteur vers le circuit secondaire ou inversement, en fonction de ces résultats. Selon d'autres exemples, les valeurs comparées ne sont pas les valeurs de température des fluides, mais des valeurs d'autres paramètres physiques du système telles que des valeurs de pression ou des valeurs de débit.

Les valeurs comparées peuvent également comprendre une valeur de coût actuel de l'électricité avec une valeur seuil, par exemple enregistrée dans la mémoire du système. Un avantage est de consommer l'énergie électrique issue du circuit secondaire 3 lorsque le coût de l'électricité devient trop élevé par rapport à une valeur seuil prédéterminée.

### Deuxième pompe à chaleur

Le système selon l'invention comprend une deuxième pompe à chaleur PAC₂. La deuxième pompe à chaleur comprend un troisième circuit C₃ dans lequel circule un troisième fluide frigorigène FL_{3.} Le troisième fluide frigorigène FL₃ circule au travers d'un évaporateur de la deuxième pompe à chaleur PAC₃ et d'un condenseur de la deuxième pompe à chaleur PAC₂.

L'évaporateur de la deuxième pompe à chaleur PAC₂ permet d'évaporer le troisième fluide frigorigène FL₃ par un échange calorifique entre une source primaire de calorie S₁ et ledit fluide frigorigène FL₃. La source primaire de calorie S₁ comprend par exemple de l'air, une source d'énergie solaire, une source géothermique ou encore une source d'eau. Dans le cas de l'air et de l'eau, l'échange thermique entre le troisième fluide frigorigène FL₃ et la source primaire de calories S₁ se fait par exemple par échange direct. Dans le cas d'une source solaire ou d'une source géothermique, l'échange de calories se fait par exemple par l'intermédiaire d'un autre fluide caloporteur, par exemple de l'eau.

Le condenseur de la deuxième pompe à chaleur PAC₂ permet de condenser le troisième fluide frigorigène FL₃. Le condenseur de la deuxième pompe à chaleur PAC₂ est placé dans le premier échangeur de chaleur C_{TE}. Cette configuration permet avantageusement un échange calorifique d'une part entre le troisième fluide frigorigène et le fluide secondaire FL_{C}, FL_{H}, et d'autre part entre le troisième fluide frigorigène FL₃ et le matériau à changement de phase MCP.

## Revendications

1. Système comportant :
▪ une première pompe à chaleur (PAC) comprenant un évaporateur (Eᵥ) et un condenseur (Eₚ), et comprenant des moyens pour acheminer un fluide frigorigène (FL₁) entre deux échangeurs de chaleur (C_{TE}, H_{TE}), ledit fluide frigorigène (FL₁) circulant à travers un premier circuit (C₁) fermé ;
▪ un premier échangeur de chaleur (C_{TE}) et un second échangeur de chaleur (H_{TE}), le premier échangeur de chaleur (C_{TE}) étant utilisé comme source froide par la pompe à chaleur (PAC), et au moins un desdits premier et second échangeurs (C_{TE}, H_{TE}) comprenant :
i. une portion du premier circuit (C₁) pour acheminer le fluide frigorigène (FL₁) au travers dudit premier ou second échangeur (C_{TE}, H_{TE}) ;
ii. une portion d'un deuxième circuit (C₂) dans lequel circule un fluide secondaire (FL_{C}, FL_{H}), pour acheminer ledit fluide secondaire (FL_{C}, FL_{H}) au travers dudit premier ou second échangeur (C_{TE}, H_{TE}).
iii. un matériau à changement de phase (MCP) réparti dans l'échangeur de chaleur (C_{TE}, H_{TE}) et collectant une portion d'une quantité d'énergie thermique transportée par le fluide frigorigène (FL₁) dans la portion du premier circuit (C₁) ou par le fluide secondaire (FL_{H}, FL_{C}) dans la portion du deuxième circuit (C2),
**caractérisé en ce que** le système comporte en outre :
▪ Une deuxième pompe à chaleur (PAC₂) comprenant un évaporateur et un condenseur et comprenant un troisième circuit (C₃) pour acheminer un deuxième fluide frigorigène (FL₃) entre l'évaporateur et le condenseur de ladite deuxième pompe à chaleur (PAC₂), ledit évaporateur permettant un échange calorifiques entre le deuxième fluide frigorigène (FL₃) et une source primaire de calories (S₁) et ledit condenseur étant positionné dans le premier échangeur (H_{TE}) pour permettre un échange de calories entre d'une part le deuxième fluide frigorigène (FL₃) et le matériau à changement de phase (MCP), et d'autre part, le deuxième fluide frigorigène (FL₃) et le fluide secondaire (FL_{H}, FL_{C}).

2. Système selon la revendication 1, dans lequel la portion du premier circuit (C₁) et la portion du deuxième circuit (C₂) forment des courbes de dimensions sensiblement égales s'étendant chacune entre deux parois de l'échangeur de chaleur (C_{TE}, H_{TE}) et formant des plaques successives définissant un volume à l'intérieur de l'échangeur de chaleur (C_{TE}, H_{TE}), le matériau à changement de phase (MCP) étant agencé autour du volume et entre les plaques formées par le premier circuit (C₁) et le deuxième circuit (C₂), pour favoriser les échanges thermiques entre d'une part le matériau à changement de phase (MCP) et le fluide frigorigène (FL₁), et d'autre part le matériau à changement de phase (MCP) et le fluide secondaire (FL_{C}, FL_{H}).

3. Système selon la revendication 1, comprenant une pluralité d'éléments de stockage d'énergie (NOD) comprenant le matériau à changement de phase (MCP), lesdits éléments de stockage d'énergie (NOD) étant répartis dans lesdits échangeurs de chaleur (C_{TE}, H_{TE}) et au contact de la portion du premier circuit (C₁) et de la portion du second circuit (C₂) pour permettre d'une part un échange calorifique entre le fluide frigorigène (FL₁) et le matériau à changement de phase (MCP) et d'autre part un échange calorifique entre le matériau à changement de phase (MCP) et le fluide secondaire (FL₂, FL_{C}).

4. Système selon l'une quelconque des revendications précédentes, dans lequel l'évaporateur (E_{V}) est positionné dans le premier échangeur de chaleur (C_{TE}) et le condenseur est positionné dans le second échangeur de chaleur (H_{TE}), et dans lequel le premier échangeur de chaleur (C_{TE}) et le second échangeur de chaleur (H_{TE}) comprennent chacun les éléments de stockage d'énergie (NOD) qui se trouvent au contact dudit évaporateur (Eᵥ) et dudit condenseur (C_{d}) de la première pompe à chaleur (PAC).

5. Système selon l'une quelconque des revendications précédentes, dans lequel la portion du premier circuit (C₁) du premier échangeur de chaleur (C_{TE}) et/ou du deuxième échangeur de chaleur (H_{TE}) forme des courbes de dimensions sensiblement égales.

6. Système selon l'une quelconque des revendications 3 à 5, dans lequel les éléments de stockage d'énergie (NOD) présentent une forme sensiblement oblongue, et comprennent une ouverture centrale permettant une insertion d'un sommet d'une courbe de la portion du premier circuit (C₁) au travers desdits éléments de stockage d'énergie (NOD), de sorte à favoriser un échange calorifique entre le fluide frigorigène (FL₁) et le matériau à changement de phase (MCP).

7. Système selon la revendication 6, dans lequel le premier échangeur de chaleur (C_{TE}) ou le second échangeur de chaleur (H_{TE}) présente une forme sensiblement cylindrique, et dans lequel les éléments de stockage d'énergie (NOD) sont d'une dimension sensiblement égale pour permettre un empilement desdits éléments de stockage d'énergie (NOD) sur plusieurs boucles de la portion du premier circuit (C₁).

8. Système selon l'une quelconque des revendications 3 à 7, dans lequel les éléments de stockage d'énergie comprennent des singularités (Sᵢₙ) de surface pour favoriser un écoulement turbulent du fluide secondaire (FLc, FL_{H}).

9. Système selon l'une quelconque des revendications précédentes, comprenant des moyens de récupération d'une quantité de chaleur fatale (C_{f}) et des moyens pour acheminer ladite quantité de chaleur fatale (C_{f}) vers au moins un circuit du second échangeur de chaleur (H_{TE}).

10. Système selon l'un quelconque des revendications précédentes, comprenant un dispositif de production d'énergie à vapeur (P_{EV}) comprenant au moins une machine de détente (Dₜ₂), ladite machine de détente (Dₜ₂) étant alimentée par au moins une partie de l'énergie thermique stockée par le matériau à changement de phase (MCP), ledit dispositif de production d'énergie à vapeur (P_{EV}) étant apte à produire une énergie mécanique (E_{MEC}) à partir de ladite machine de détente (Dt2).

11. Système selon la revendication 10, comprenant un générateur ou un alternateur pour produire une quantité d'énergie électrique à partir de l'énergie mécanique (E_{MEC}) produite à partir de la machine de détente (Dt2).

12. Système selon l'une quelconque des revendications précédentes, comprenant une mémoire pour enregistrer périodiquement des températures d'au moins deux fluides parmi les fluides suivants :
▪ une partie du fluide frigorigène circulant dans le premier échangeur de chaleur (C_{TE}) ;
▪ une partie du fluide frigorigène circulant dans le second échangeur (H_{TE}) ;
▪ le fluide frigorigène (FL₁) entrant dans le premier échangeur (CTE) ;
▪ le fluide secondaire (FL_{C}, FL_{H}) sortant du premier échangeur (C_{TE}) ;
▪ le fluide frigorigène (FL₁) entrant dans le second échangeur (HTE) ;
▪ le fluide secondaire (FL₂, FL_{H}) sortant du second échangeur (HTE),
et comprenant un calculateur pour effectuer un calcul d'une différence entre des températures enregistrées dans la mémoire ou pour mettre en œuvre au moins un calcul d'une comparaison d'au moins une température enregistrée avec au moins une valeur seuil, ledit système comportant un organe de commande recevant une consigne déterminée en fonction des calculs mis en œuvre par le calculateur, pour :
▪ piloter le débit du fluide frigorigène (FL₁) ou du fluide secondaire (FL₂, FL_{H}) ou,
▪ piloter une vanne de fermeture du dispositif de production d'énergie à vapeur (P_{EV}).

## Patentansprüche

1. System, umfassend:
▪ eine erste einen Verdampfer (Eᵥ) und einen Verflüssiger (Eₚ) umfassende Wärmepumpe (WP), die Mittel zum Zuleiten eines Kältemittels (FL₁) zwischen zwei Wärmetauschern (C_{TE}, H_{TE}) umfasst, wobei das Kältemittel (FL₁) durch einen ersten geschlossenen Kreislauf (C₁) zirkuliert;
▪ einen ersten Wärmetauscher (C_{TE}) und einen zweiten Wärmetauscher (H_{TE}), wobei der erste Wärmetauscher (C_{TE}) von der Wärmepumpe (WP) als Kältequelle verwendet wird und wobei vom ersten und zweiten Wärmetauscher (C_{TE}, H_{TE}) mindestens einer umfasst:
i. einen Teil des ersten Kreislaufs (C₁), um das Kältemittel (FL₁) durch den ersten oder zweiten Wärmetauscher (C_{TE}, H_{TE}) zu leiten;
ii. einen Teil eines zweiten Kreislaufs (C₂), in dem ein Sekundärfluid (FL_{C}, FL_{H}) zirkuliert, um das Sekundärfluid (FLc, FL_{H}) durch den ersten oder zweiten Wärmetauscher (C_{TE}, H_{TE}) zu leiten.
iii. ein Phasenwechselmaterial (PCM), das im Wärmetauscher (C_{TE}, H_{TE}) verteilt ist und einen Teil einer Wärmeenergiemenge aufnimmt, die vom Kältemittel (FL₁) in den Teil des ersten Kreislaufs (C₁) oder vom Sekundärfluid (FL_{H}, FLc) in den Teil des zweiten Kreislaufs (C₂) transportiert wird, wobei das System ferner umfasst:
▪ Eine zweite einen Verdampfer und einen Verflüssiger umfassende Wärmepumpe (WP₂), die einen dritten Kreislauf (C₃) umfasst, um ein zweites Kältemittel (FL₃) zwischen dem Verdampfer und dem Verflüssiger der zweiten Wärmepumpe (WP₂) zuzuleiten, wobei der Verdampfer einen Wärmeaustausch zwischen dem zweiten Kältemittel (FL₃) und einer primären Wärmequelle (S₁) ermöglicht und wobei der Verflüssiger im ersten Wärmetauscher (H_{TE}) positioniert ist, um einen Wärmeaustausch zwischen einerseits dem zweiten Kältemittel (FL₃) und dem Phasenwechselmaterial (PCM) und andererseits dem zweiten Kältemittel (FL₃) und dem sekundären Kältemittel (FL_{H}, FLc) zu ermöglichen.

2. System nach Anspruch 1, wobei der Teil des ersten Kreislaufs (C₁) und der Teil des zweiten Kreislaufs (C₂) im Wesentlichen gleich große Kurven bilden, die sich jeweils zwischen zwei Wänden des Wärmetauschers (C_{TE}, H_{TE}) erstrecken und aufeinanderfolgende Platten bilden, die ein Volumen innerhalb des Wärmetauschers (C_{TE}, H_{TE}) definieren, wobei das Phasenwechselmaterial (PCM) um das Volumen herum und zwischen den vom ersten Kreislauf (C₁) und vom zweiten Kreislauf (C₂) gebildeten Platten angeordnet ist, um den Wärmeaustausch zwischen einerseits dem Phasenwechselmaterial (PCM) und dem Kältemittel (FL₁) und andererseits dem Phasenwechselmaterial (PCM) und dem Sekundärfluid (FLc, FL_{H}) zu begünstigen.

3. System nach Anspruch 1, umfassend mehrere Energiespeicherelemente (NOD), die das Phasenwechselmaterial (PCM) umfassen, wobei die Energiespeicherelemente (NOD) in den Wärmetauschern (C_{TE}, H _{TE}) verteilt sind und mit dem Teil des ersten Kreislaufs (C₁) und dem Teil des zweiten Kreislaufs (C₂) in Kontakt stehen, um einerseits einen Wärmeaustausch zwischen dem Kältemittel (FL₁) und dem Phasenwechselmaterial (PCM) und andererseits einen Wärmeaustausch zwischen dem Phasenwechselmaterial (PCM) und dem Sekundärfluid (FL₂, FLc) zu ermöglichen .

4. System nach einem der vorhergehenden Ansprüche, wobei der Verdampfer (E_{V}) im ersten Wärmetauscher (C_{TE}) und der Verflüssiger im zweiten Wärmetauscher (H_{TE}) positioniert ist, und wobei der erste Wärmetauscher (C_{TE}) und der zweite Wärmetauscher (H_{TE}) jeweils die Energiespeicherelemente (NOD) umfassen, die sich in Kontakt mit dem Verdampfer (Eᵥ) und dem Verflüssiger (C_{d}) der ersten Wärmepumpe (WP) befinden.

5. System nach einem der vorhergehenden Ansprüche, wobei der Abschnitt des ersten Kreislaufs (C₁) des ersten Wärmetauschers (C_{TE}) und/oder des zweiten Wärmetauschers (H_{TE}) im Wesentlichen gleich große Kurven bildet.

6. System nach einem der Ansprüche 3 bis 5, wobei die Energiespeicherelemente (NOD) eine im Wesentlichen längliche Form aufweisen und eine zentrale Öffnung umfassen, die es ermöglicht, einen Scheitelpunkt einer Kurve des Abschnitts des ersten Kreislaufs (C₁) durch die Energiespeicherelemente (NOD) einzuführen, um einen Wärmeaustausch zwischen dem Kältemittel (FL₁) und dem Phasenwechselmaterial (PCM) zu begünstigen.

7. System nach Anspruch 6, wobei der erste Wärmetauscher (C_{TE}) oder der zweite Wärmetauscher (H_{TE}) eine im Wesentlichen zylindrische Form aufweist, und wobei die Energiespeicherelemente (NOD) im Wesentlichen gleich groß sind, um ein Stapeln der Energiespeicherelemente (NOD) über mehrere Windungen des Abschnitts des ersten Kreislaufs (C₁) zu ermöglichen.

8. System nach einem der Ansprüche 3 bis 7, wobei die Energiespeicherelemente Oberflächensingularitäten (Sᵢₙ) umfassen, um eine turbulente Strömung des Sekundärfluids (FLc, FL_{H}) zu begünstigen.

9. System nach einem der vorhergehenden Ansprüche, umfassend Mittel zur Rückgewinnung einer Abwärmemenge (C_{f}) und Mittel zum Leiten der Abwärmemenge (C_{f}) zu mindestens einem Kreislauf des zweiten Wärmetauschers (H_{TE}).

10. System nach einem der vorhergehenden Ansprüche, umfassend eine Vorrichtung zur Erzeugung von Dampfenergie (P_{EV}), die mindestens eine Entspannungsmaschine (Dₜ₂) umfasst, wobei die Entspannungsmaschine (Dₜ₂) von mindestens einem Teil der vom Phasenwechselmaterial (PCM) gespeicherten thermischen Energie versorgt wird, wobei die Vorrichtung zur Erzeugung von Dampfenergie (P_{EV}) in der Lage ist, ausgehend von der Entspannungsmaschine (Dₜ₂) mechanische Energie (E_{MEC}) zu erzeugen.

11. System nach Anspruch 10, umfassend einen Generator oder eine Lichtmaschine zur Erzeugung einer elektrischen Energiemenge ausgehend von der mechanischen Energie (E_{MEC}), die von der Entspannungsmaschine (Dₜ₂) erzeugt wird.

12. System nach einem der vorhergehenden Ansprüche, umfassend einen Speicher zum periodischen Aufzeichnen der Temperaturen von mindestens zwei der folgenden Fluide:
▪ einen Teil des Kältemittels, das durch den ersten Wärmetauscher (C_{TE}) zirkuliert;
▪ einen Teil des Kältemittels, das durch den zweiten Wärmetauscher (H_{TE}) zirkuliert;
▪ das Kältemittel (FL₁), das in den ersten Wärmetauscher (C_{TE}) gelangt;
▪ das Sekundärfluid (FLc, FL_{H}), das aus dem ersten Wärmetauscher (C_{TE}) austritt;
▪ das Kältemittel (FL₁), das in den zweiten Wärmetauscher (H_{TE}) gelangt;
▪ das Sekundärfluid (FL₂, FL_{H}), das aus dem zweiten Wärmetauscher (H_{TE}) austritt,
und umfassend einen Rechner, um eine Differenz zwischen im Speicher gespeicherten Temperaturen zu berechnen oder um mindestens eine Berechnung eines Vergleichs von mindestens einer gespeicherten Temperatur mit mindestens einem Schwellenwert durchzuführen, wobei das System ein Steuerelement umfasst, das einen bestimmten Sollwert in Abhängigkeit von den Berechnungen des Rechners empfängt, um:
▪ den Durchfluss des Kältemittels (FL₁) oder des Sekundärfluids (FL₂, FL_{H}) zu steuern oder
▪ ein Absperrventil der Vorrichtung zur Erzeugung von Dampfenergie (P_{EV}) anzusteuern.

## Claims

1. System comprising:
▪ a first heat pump (PAC) comprising an evaporator (Eᵥ) and a condenser (Eₚ), and comprising means for conveying a refrigerant fluid (FL₁) between two heat exchangers (C_{TE}, H_{TE}), said refrigerant fluid (FL₁) circulating through a first closed circuit (C₁);
▪ a first heat exchanger (C_{TE}) and a second heat exchanger (H_{TE}), the first heat exchanger (C_{TE}) being used as cold source by the heat pump (PAC), and at least one of said first and second exchangers (C_{TE}, H_{TE}) comprising:
i. a portion of the first circuit (C₁) to convey the refrigerant fluid (FL₁) through said first or second exchanger (C_{TE}, HTE);
ii. a portion of a second circuit (C₂) in which a secondary fluid (FLc, FL_{H}) circulates, to convey said secondary fluid (FLc, FL_{H}) through said first or second exchanger (C_{TE}, H_{TE}).
iii. a phase-change material (MCP) distributed in the heat exchanger (C_{TE}, H_{TE}) and collecting a portion of an amount of thermal energy transported by the refrigerant fluid (FL₁) in the portion of the first circuit (C₁) or by the secondary fluid (FL_{H}, FLc) in the portion of the second circuit (C₂), **characterized in that** the system further comprises:
▪ A second heat pump (PAC₂) comprising an evaporator and a condenser and comprising a third circuit (C₃) for conveying a second refrigerant fluid (FL₃) between the evaporator and the condenser of said second heat pump (PAC₂), said evaporator allowing a calorific exchange between the second refrigerant fluid (FL₃) and a primary calorie source (S₁) and said condenser being positioned in the first exchanger (H_{TE}) to allow a calorie exchange between, on the one hand, the second refrigerant fluid (FL₃) and the phase-change material (MCP), and, on the other hand, the second refrigerant fluid (FL₃) and the secondary refrigerant fluid (FL_{H}, F_{LC}).

2. System according to claim 1, wherein the portion of the first circuit (C₁) and the portion of the second circuit (C₂) form curves of substantially equal dimensions each extending between two walls of the heat exchanger (C_{TE}, H_{TE}) and forming successive plates defining a volume inside the heat exchanger (C_{TE}, H_{TE}), the phase-change material (MCP) being arranged around the volume and between the plates formed by the first circuit (C₁) and the second circuit (C₂), to promote heat exchanges between, on the one hand, the phase-change material (MCP) and the refrigerant fluid (FL₁), and, on the other hand, the phase-change material (MCP) and the secondary fluid (FLc, FL_{H}).

3. System according to claim 1, comprising a plurality of energy storage elements (NOD) comprising the phase-change material (MCP), said energy storage elements (NOD) being distributed in said heat exchangers (C_{TE}, H_{TE}) and in contact with the portion of the first circuit (C₁) and the portion of the second circuit (C₂) to enable, on the one hand, a calorific exchange between the refrigerant fluid (FL₁) and the phase-change material (MCP) and, on the other hand, a calorific exchange between the phase-change material (MCP) and the secondary fluid (FL₂, FLc).

4. System according to any one of the preceding claims, wherein the evaporator (Ev) is positioned in the first heat exchanger (C_{TE}) and the condenser is positioned in the second heat exchanger (H_{TE}), and wherein the first heat exchanger (C_{TE}) and the second heat exchanger (H_{TE}) each comprise the energy storage elements (NOD) that are in contact with said evaporator (Eᵥ) and said condenser (C_{d}) of the first heat pump (PAC).

5. System according to any one of the preceding claims, wherein the portion of the first circuit (C₁) of the first heat exchanger (C_{TE}) and/or the second heat exchanger (H_{TE}) forms curves of substantially equal dimensions.

6. System according to any one of claims 3 to 5, wherein the energy storage elements (NOD) have a substantially oblong shape, and comprise a central opening allowing an apex of a curve of the portion of the first circuit (C₁) to be inserted through said energy storage elements (NOD), so as to promote a calorific exchange between the refrigerant fluid (FL₁) and the phase-change material (MCP).

7. System according to claim 6, wherein the first heat exchanger (C_{TE}) or the second heat exchanger (H_{TE}) has a substantially cylindrical shape, and wherein the energy storage elements (NOD) are substantially equal in size to allow a stacking of said energy storage elements (NOD) over several loops of the portion of the first circuit (C₁).

8. System according to any one of claims 3 to 7, wherein the energy storage elements comprise surface singularities (Sᵢₙ) to promote turbulent flow of the secondary fluid (FLc, FL_{H}).

9. System according to any one of the preceding claims, comprising means for recovering an amount of waste heat (Cf) and means for conveying said amount of waste heat (C_{f}) to at least one circuit of the second heat exchanger (H_{TE}).

10. System according to any one of the preceding claims, comprising a steam energy production device (P_{EV}) comprising at least one expansion machine (Dₜ₂), said expansion machine (Dₜ₂) being supplied by at least a part of the thermal energy stored by the phase-change material (MCP), said steam energy production device (P_{EV}) being capable of producing mechanical energy (E_{MEC}) from said expansion machine (Dₜ₂).

11. System according to claim 10, comprising a generator or an alternator for producing an amount of electrical energy from the mechanical energy (E_{MEC}) produced from the expansion machine (Dₜ₂).

12. System according to any one of the preceding claims, comprising a memory for periodically recording temperatures of at least two fluids among the following fluids:
▪ a part of the refrigerant fluid circulating in the first heat exchanger (C_{TE});
▪ a part of the refrigerant fluid circulating in the second exchanger (HTE);
▪ the refrigerant fluid (FL₁) entering the first exchanger (C_{TE});
▪ the secondary fluid (FLc, FL_{H}) exiting the first exchanger (C_{TE});
▪ the refrigerant fluid (FL₁) entering the second exchanger (H_{TE});
▪ the secondary fluid (FL₂, FL_{H}) exiting the second exchanger (HTE),
and comprising a calculator to perform a calculation of a difference between temperatures recorded in the memory or to implement at least one calculation of a comparison of at least one temperature recorded with at least one threshold value, said system comprising a command member receiving a setpoint determined as a function of calculations implemented by the calculator, to:
▪ manage the flow of the refrigerant fluid (FL₁) or the secondary fluid (FL₂, FL_{H}) or,
▪ manage a shut-off valve of the steam energy production device (P_{EV}).
